**Europäisches Patentamt**

**European Patent Office**

**Office européen des brevets**

(11) Publication number: **0 118 653**
**B1**

(12) # EUROPEAN PATENT SPECIFICATION

(45) Date of publication of patent specification: **16.04.86**

(21) Application number: **83830272.7**

(22) Date of filing: **21.12.83**

(51) Int. Cl.⁴: **H 04 N 3/24,** H 04 N 9/44

(54) **Circuit for processing deflection signal in image reproduction devices.**

(30) Priority: **24.12.82 IT 6851482**

(43) Date of publication of application:
**19.09.84 Bulletin 84/38**

(45) Publication of the grant of the patent:
**16.04.86 Bulletin 86/16**

(84) Designated Contracting States:
**DE FR GB NL**

(56) References cited:
**US-A-4 263 610**

(73) Proprietor: **Società Italiana per lo Sviluppo
dell'Elettronica S.I.SV.EL. S.p.A.
Via delle Quattro Fontane 20
I-00184 Roma (IT)**

(72) Inventor: **Colomera, Paolo
Via Colombo 2/11
I-10045 Piossasco (Torino) (IT)**

(74) Representative: **Quinterno, Giuseppe et al
c/o Jacobacci-Casetta & Perani S.p.A.
Via Alfieri, 17
I-10121 Torino (IT)**

Courier Press, Leamington Spa, England.

## Description

The present invention relates to a circuit for processing deflection signals in image reproducing devices, in particular colour images. It is known that integrated circuits are available, commonly called "jungle" circuits both because of the great number of functions they can carry out and also because of their complexity, which are usually utilized profitably in circuits for processing signals for the horizontal and vertical deflection. These circuits, receiving video and flyback signals at their inputs, carry out different functions: they work as separators of the vertical and horizontal synchronisms; incorporate a horizontal oscillator circuit; compare phase and frequency of the received horizontal synchronism signal and the local horizontal oscillator signal; they supply, finally the drive pulses for the final line stage and in particular, build up the so called "sand castle" pulse. This last pulse is a three-level one, it is well known, and contains three different types of information: the high part of the pulse gives the control signal to the gate circuit which takes off the "burst" pulses of the video signal; the large part of the "sand castle" pulse gives the signal which determines the length of time of the active blanking on the picture tube.

It is known that said banking signal cuts off the electronic beam on the screen during the flybacks. The width of the sand castle pulse must then correspond to the retrace time otherwise defects in the image reproduction become visible.

Unfortunately when integrated circuits of the jungle type above described are used, if at their inputs the flyback pulse is let in unchanged from the horizontal deflection transformer a deficiency in blanking occurs: as a consequence two brighter bands may appear on the video, due to the fact that to the trace the retrace beam is added, since it was not turned off, consequently causing an over-excitation of the phosphors.

Said problem may be solved by utilizing 110° tubes with dynamic east-west correction so to obtain, by suitable regulations, an overscanning of the screen.

In less expensive appliances however tubes at 90° are utilized, in which said regulations are not possible since said tubes have no east-west correction circuits precisely because they are more economical. In said appliances then the abovesaid problem remains of an insufficient width of the blanking with the consequences already mentioned.

Main purpose of the present invention is that of overcoming said drawbacks and indicating a circuit for processing deflection signals producing a blanking pulse lasting possibly as long as the retrace time.

To that extent the present invention relates to a circuit for processing deflection signals in image reproducing devices, in particular colour images, comprising a threshold voltage comparator, to which an impulsive retrace signal is given, originated with average null value from deflection circuits and producing at its output an impulsive driving signal for blanking the image signal on a reproducing unit during the deflection retrace periods, characterized in that means are provided to add a direct current component to the impulsive retrace signal voltage at the threshold comparator input, in order to practically make the commutation threshold of the comparator to coincide with one of the limit values reached by the voltage of the impulsive retrace signal, so to obtain a timely commutation at the changes of the in-coming signal and to obtain that the width of the retrace signal pulses and that of the blanking signal pulses be substantially coincident.

Other purposes and advantages of the present invention will result from the ensuing description and drawings, given as a mere explanatory but non-limiting examples, in which:

—fig. 1 represents qualitatively: in A) the behaviour of the saw-tooth current passing through the deflection coil; in B) the ideal blanking pulse, lasting as long as the retrace time; in C) the flyback pulse in alternate current, as supplied at the inputs of the jungle circuit;

—fig. 2 represents: in A) a simple threshold comparator circuit and in B) the qualitative behaviour of the pulses at its inputs and outputs and

—fig. 3 represents the electric circuit of a possible embodiment of the present apparatus.

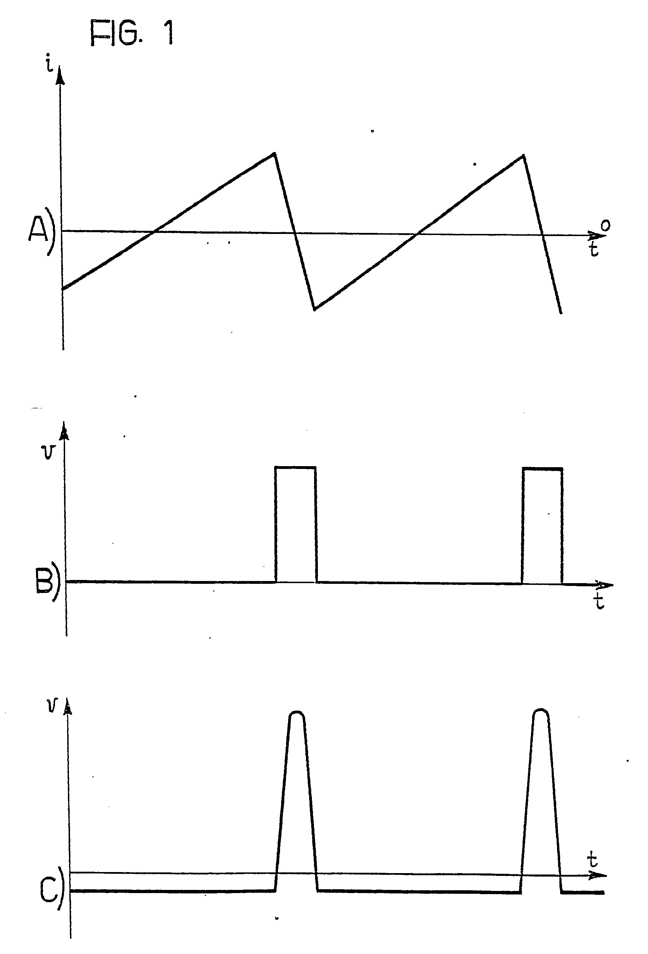

Referring to fig. 1 it must be noted that the flyback pulse has an average null value. It is precisely from said flyback signal that the jungle circuit builds up the blanking signal applied to the picture tube.

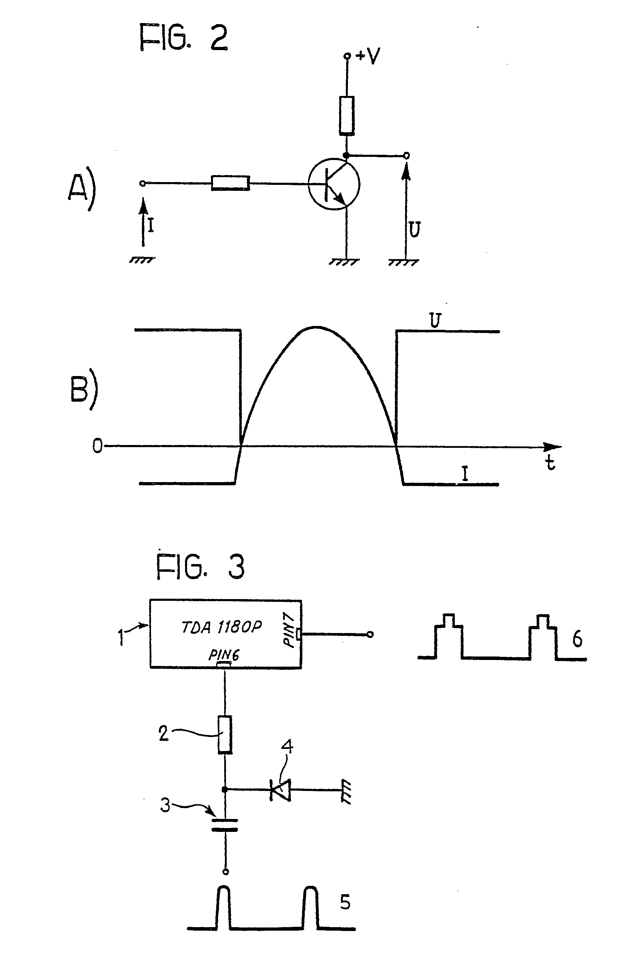

To understand how this may work, let us just think of what would happen if said pulses were applied at the input of the simple circuit represented in fig. 2, A). When the signal applied a input I exceeds the transistor's conduction threshold, the voltage at U output, previously high, now commutates and becomes null.

Something very similar to this occurs also inside the jungle circuit: practically one part of it behaves like a threshold comparator.

Let us now examine the operation of said circuit expanding the time axis for the input and output pulses. Examining fig. 2, B) it can be seen that the blanking pulse that should result at the output of the jungle circuit does not last as long as the retrace time, but is shorter.

In fact, not only the threshold value at which the output commutes is slightly higher than zero, but above all, the flyback signal, being given to the circuit with an average null value, presents a negative part with respect to the zero voltage axis during the longer non-blanking trace intervals: when the retrace time comes, the flyback voltage starts growing higher, but, being the flyback pulse noticeably sinusoidal, this increase is not immediate and a few seconds pass before it can reach, starting from a negative value, the positive value necessary to cause the threshold circuit commutation.

The blanking pulse starts therefore about one microsecond later than the flyback pulse. Usually, then, when utilizing said integrated circuits and letting in at their input the flyback pulse as it is taken from the horizontal deflection transformer, a deficiency in blanking occurs.

Let us examine fig. 3, representing as previously said, the electric circuit of a possible embodiment of the present apparatus.

There is an integrated circuit 1, which may be for example a jungle circuit of the TDA 1180p type by the firm SGS—ATES, at one input of which (PIN 6) is to be applied a retrace signal (flyback) 5. Precisely at such input is connected with one end a resistor 2. The other end of said resistor is connected to a capacitor 3 and, at the same time, to the cathode of a semiconductor element diode 4. The anode of said diode is connected to the ground. From the other end of said capacitor enters the flyback signal in alternate current from the line transformer.

It must be remembered, to understand well the circuit operation, that among all the other functions TDA 1180p can carry out, in particular it creates the sand castle pulse 6 starting from the flyback plse 5 flowing in PIN 6. To said pin is connected the resistor 2.

Capacitor 3 and diode 4 together, constitute a clamping circuit.

The value of resistor 2 placed in series to said circuit is chosen so to guarantee the correct functioning of the clamping circuit and, at the same time, to limit the amount of current flowing in the integrated circuit.

The function of said clamping circuit is well known: if at the input of a clamping circuit a signal is let in, having average null value, like the flyback signal in alternate current, that is, a voltage having part of the cycle in which is negative and part of the cycle in which is positive, at the output of the clamping circuit the same signal is present fixed with one end to a reference voltage, in our case to the ground. The driving signal entering now the integrated jungle circuit is perfectly alike in shape to the flyback pulse, for example, from the horizontal deflection circuit transformer, but is upwards-shifted (since the diode has the anode connected to the ground) and that part of signal that was previously a negative voltage is now a voltage substantially at zero level. Practically, the jungle integrated circuit builds up the sand castle pulse according to an input signal with the same shape of the flyback, but no more with an average null value: during the non-blanking time now the in-coming voltage is null and no more negative and, as soon as the retrace time starts, said signal becomes positive. The integrated circuit senses immediately this upward change and, consequently the blanking signal produced at the output retards no more.

From the description the advantages are evident of the circuit for processing deflection signals in image reproducing devices, object of the present invention.

In particular, these advantages are represented in that, with a very slight increase in production cost, a correct width of the horizontal blanking pulses is ensured to be sent to the driving circuit of the picture tube and, consequently the problem is solved of a difference between the retrace time of deflection circuits and that of the video blanking signal with a consequent over-excitation of the phosphors at both sides of the screen, that is in the case of cheap images reproduction apparatuses which are not supplied with dynamic correction circuits.

It is evident to those skilled in the art that the device described as an example can be modified and varied.

Among other variants, the use can be mentioned of a clamping device like the one hereinbefore described in a circuit for the vertical blanking; this in particular may be convenient when a vertical blanking pulse ought to be created starting from a vertical deflection signal of average null value.

**Claims**

1. Circuit for processing deflection signals in image reproducing devices, in particular colour images, comprising a voltage threshold comparator, to which an impulsive retrace signal (5) is given, originated with average null value from deflection circuits and producing at its output an impulsive driving signal (6) for blanking the image signal on a reproducing unit during the deflection retrace periods, characterized in that means (2, 3, 4) are provided to add a direct current component to the impulsive retrace signal voltage (5) at the threshold comparator input, in order to practically make the commutation threshold of the comparator to coincide with one of the limit values reached by the voltage of the impulsive retrace signal (5), so to obtain a timely commutation at the changes of the in-coming signal and to obtain that the width of the retrace pulses (5) and that of the blanking signals pulses (6) be substantially coincident.

2. Circuit for processing signals according to claim 1, characterized in that said means for adding the direct current component comprise a voltage clamping circuit (2, 3, 4).

3. Circuit for processing signals according to claim 2, characterized in that said clamping circuit comprises an unidirectional conduction element (4), presenting one end connected to a reference potential and its other end connected to one end of a condenser (3) to the other end of which is applied said impulsive retrace signal (5) with average null value.

4. Circuit for processing signals according to claim 3, characterized in that said unidirectional conduction element (4) is a semiconductor diode (4).

5. Circuit for processing signals according to claims 3 and 4, characterized in that the anode of said diode (4) is connected to the ground.

6. Circuit for processing signals according to claims 3 and 4, characterized in that the cathode of said diode (4) is connected to said condenser (3) and to a resistor (2) end.

7. Circuit for processing signals according to claim 6, characterized in that the value of said resistor (2) allows the correct operation of said clamping circuit and controls the input current to said threshold voltage comparator.

8. Circuit for processing signals according to claim 1, characterized in that said threshold comparator is inside an integrated circuit (1) suitable to perform several functions ("jungle" circuit).

9. Circuit for processing signals according to claim 7, characterized in that said integrated circuit (1) is of the TDA 1180 p type.

10. Circuit for processing signals according to claim 1, characterized in that said signal with average null value is the horizontal flyback signal (5) from the line output transformer.

## Patentansprüche

Schaltung zur Verarbeitung von Ablenksignalen in einrichtungen zur Wiedergabe von Bildern, insbesondere Farbbildern, mit einem Spannungsschwellenwertkomparator, auf den ein impulsförmiges Rücklaufsignal (5) gegeben wird, das mit einem mittleren Wert Null von Ablenkschaltungen kommt, und der an seinem Ausgang ein impulsförmiges Treibsignal (6) zum Dunkeltasten des Bildsignals auf einer Wiedergabeeinheit während der ablenkrücklaufperioden erzeugt, dadurch gekennzeichnet, daß ein Einrichtung (2, 3, 4) zum Hinzufügen einer Gleichstromkomponente zu der impulsförmigen Rücklaufsignalspannung (5) am Schwellenwertkomparatoreingang vorgesehen ist, um den Umschaltschwellenwert des Komparators praktisch mit einem der Grenzwerte susammenfallend zu machen, die von der Spannung des impulsförmigen Rücklaufsignals (5) erreicht werden, um so eine zeitlich richtige Umschaltung bei den Änderungen des ankommenden Signals zu erreichen und um zu erreichen, daß die Breite der Rücklaufimpulse (5) und die der Dunkeltastimpulse (6) im wesentlichen zusammenfallen.

2. Schaltung zur Verarbeitung von Signalen nach Anspruch 1, dadurch gekennzeichnet, daß die Einrichtung zum Hinzufügen der Gleichstromkomponente eine Spannungsklemmschaltung (2, 3, 4) aufweist.

3. Schaltung zur Verarbeitung von Signalen nach Anspruch 2, dadurch gekennzeichnet, daß die Klemmschaltung ein in nur einer Richtung leitendes Element (4) aufweist, dessen eines Ende an ein Bezugspotential angeschlossen und dessen anderes Ende mit einem Ende eines Kondensators (3) verbunden ist, an dessen anderes Ende das impulsförmige Rücklaufsignal (5) mit Mittelwert Null angelegt wird.

4. Schaltung zur Verarbeitung von Signalen nach Anspruch 3, dadurch gekennzeichnet, daß das nur in einer Richtung leitende Element (4) eine Halbleiterdiode (4) ist.

5. Schaltung zur Verarbeitung von Signalen nach den Ansprüchen 3 und 4, dadurch gekennzeichnet, daß die Anode der Diode (4) mit Masse verbunden ist.

6. Schaltung zur Verarbeitung von Signalen nach den Ansprüchen 3 und 4, dadurch gekennzeichnet, daß die Kathode der Diode (4) mit dem Kondensator (3) und einem Ende eines Widerstandes (2) verbunden ist.

7. Schaltung zur Verarbeitung von Signalen nach Anspruch 6, dadurch gekennzeichnet, daß der Wert des Widerstandes (2) die Korrekte Arbeitsweise der Klemmschaltung erlaubt und den Eingangsstrom zum Schwellenspannungskomparator steuert.

8. Schaltung zur Verarbeitung von Signalen nach Anspruch 1, dadurch gekennzeichnet, daß sich der Schwellenwertkomparator innerhalb einer integrierten Schaltung (1) befindet, die zur Durchführung mehrerer Funktionen geeignet ist ("Dschungel"-Schaltung).

9. Schaltung zur Verarbeitung von Signalen nach Anspruch 7, dadurch gekennzeichnet, daß die integrierte Schaltung (1) vom Typ TDA 1180 p ist.

10. Schaltung zur Verarbeitung von Signalen nach Anspruch 1, dadurch gekennzeichnet, daß das Signal mit mittlerem Wert Null das Horizontalrücklaufsignal (5) vom Zeilenausgangsübertrager ist.

## Revendications

1. Circuit de traitement de signaux de déflexion dans des dispositifs de reproduction d'image, en particulier d'image en couleur, comprenant un comparateur de seuil de tension, auquel est appliqué un signal impulsionnel (5) de retraçage fourni avec une valeur moyenne nulle par des circuits de déflexion, et produisant à sa sortie un signal l'impulsion de commande (6) pour supprimer le signal d'image sur une unité de reproduction pendant les périodes de retraçage de déflexion, caractérisé en ce qu'il comprend des moyens (2, 3, 4) pour ajouter une composante de courant continu à la tension du signal impulsionnel de retraçage (5) à l'entrée du comparateur de seuil, afin de faire coïncider pratiquement le seuil de commutation du comparateur avec une des valeurs limites atteintes par la tension du signal impulsionnel de retraçage (5) de façon à obtenir une commutation au bon moment, aux changements du signal d'entrée, et à obtenir que la largeur des impulsions de retraçage (5) et celle des impulsions de supresion (6) coïncident substantiellement.

2. Circuit de traitment de signaux selon la revendication 1, caractérisé en ce que lesdits moyens pour ajouter une composante en courante continu comprennent un circuit tronqueur de tension (2, 3, 4).

3. Circuit de traitement de signaux selon la revendication 2, caractérisé en ce que ledit circuit tronqueur comprend un élément conducteur unidirectionnel (4), présentant und extrémité connectée à un potentiel de référence et son autre extrémité connectée d'une part à une forme d'un condensateur (3) à l'autre forme duquel est appliqué ledit signal impulsionnel de retraçage (5), de valeur moyenne nulle.

4. Circuit de traitement de signaux selon la revendication 3, caractérisé en ce que ledit élément conducteur unidirectionnel (4) est une diode semi-conductrice (4).

5. Circuit de traitement de signaux selon la revendication 3 et 4, caractérisé en ce que l'anode de ladite diode (4) est reliée à la masse.

6. Circuit de traitement de signaux selon les revendications 3 et 4, caractérisé en ce que la cathode de ladite diode (4) est connectée audit condensateur (3) et à l'extrémité d'une résistance (2).

7. Circuit de traitement de signaux selon la revendication 6, caractérisé en ce que la valeur de ladite résistance (2) permet le fonctionnement correct dudit circuit tronqueur et le contrôle du courant d'entrée audit comparateur de seuil de tension.

8. Circuit de traitement de signaux selon la revendication 1, caractérisé en ce que ledit comparateur de seuil est compris dans un circuit intégré (1) approprié pour fournir plusieurs fonctions (circuit "jungle").

9. Circuit de traitement de signaux selon la revendication 7, caractérisé en ce que ledit circuit intégré (1) est du type TDA 1180 p.

10. Circuit de traitement de signaux selon la revendication 1, caractérisé en ce que ledit signal à valeur moyenne nulle est le signal de retour de spot horizontal (5) du transformateur de sortie de ligne.

FIG. 1

A)

B)

C)

## FIG. 2

A)

B)

## FIG. 3

TDA 1180P

PIN7

PIN6

1

2

4

3

5

6